# EUROPEAN PATENT APPLICATION

(11) **EP 4 262 048 A1**
(43) Date of publication of application: **18.10.2023**
(21) Application number: 22167668.7
(22) Date of filing: 11.04.2022
(51) Int. Cl.: H02J 9/06

(54) **UNINTERUPTIBLE POWER SUPPLY SYSTEM AND OPERATING METHOD**

(71) Applicant: ABB SCHWEIZ AG, 5400 Baden (CH)
(72) Inventor: COLOMBI, Silvio, 6616 Losone (CH); HANDLIN, Harry, Birmingham, 35242 (US)
(74) Representative: Maiwald GmbH

(57) **Abstract**

The invention provides a power supply system comprising one or more uninterruptible power supplies, UPSs, a catcher system, one or more communication channels, each communicatively coupling one of the UPSs with another one of the UPSs or with the catcher system, and one or more loads, each associated with at least one of the UPSs. Each of the one or more UPSs is a multiport uninterruptible power supply, UPS, comprising a multiport transfer switch operable to selectively switch between at least a first mode, a second mode, and a third mode of the UPS supplying power to the load or loads associated with the UPS. In the first mode, power is supplied from the grid via a converter of the UPS, in the second mode, power is supplied from the catcher system via the UPS, and, in the third mode, power is supplied from the grid via the UPS bypassing the converter of the UPS.

## Description

### FIELD OF THE INVENTION

The invention pertains to a power supply system comprising one or more uninterruptible power supplies, UPSs, and a catcher system and method for operating a power supply system.

### BACKGROUND

Power supply systems having UPSs and a catcher system are generally configured such that each UPS provides a bypass switch for switching between power supply from the grid via the UPS'S converter and power supply from the grid bypassing the UPS's converter. Moreover, between each UPS and an associated load, i.e., a load to be supplied by the UPS, a transfer switch for switching between a power supply from the UPS and a power supply from the catcher system.

In more recent developments, communication channels have been added that allow for communication between the UPS and the catcher and between the UPS and the associated transfer switch.

However, the current architecture faces different challenges. The systems are relatively large and costly and coordination of the power supply is challenging.

It is an objective of the present invention to provide a power supply system and method for operating the power supply system that overcome at least some of the above challenges.

### SUMMARY

The object is achieved by the present invention. The invention provides a power supply system and a method for operating a power supply system according to the independent claims. Preferred embodiments are laid down in the dependent claims.

The invention provides a power supply system comprising one or more uninterruptible power supplies, UPSs, and a catcher system. In particular, the power supply system may comprise a plurality of UPSs, e.g., at least two or at least three UPS. The power supply system further comprises one or more communication channels, each communicatively coupling one of the UPSs with at least one, in particular all, other of the UPSs and/or with the catcher system.

The system further comprises one or more loads, each associated with at least one of the UPSs.

A load being associated with a UPS may mean that the system is configured such that the load is protected by the UPS, e.g., the system being configured such that the UPS, in normal operation, secures power supply to the load associated with the UPS.

In other words, a load being associated with a UPS may mean that the system is configured such that the load can be supplied with power by the UPS, e.g., via a power line connected to the UPS and the load. Accordingly, for example, each of the loads may be supplied by at least one of the UPSs.

It is noted that the system may optionally comprise one or more UPSs that are not loaded at a given point in time, i.e., not all UPSs of the system need always be loaded. In the present disclosure, features relating to the UPSs refer to loaded UPSs unless otherwise specified.

Each of the one or more UPSs is a multiport uninterruptible power supply, UPS, comprising a multiport transfer switch operable to selectively switch between at least a first mode, a second mode, and a third mode of the UPS supplying power to the load or loads associated with the UPS. The first, second, and third mode will, in the following, be collectively referred to as "the modes". The power supply system may, particularly, be configured to automatically selectively switch between the modes. Note that the multiport transfer switch may, for example, be a single phase or a three-phase switch.

In the first mode, power is supplied from the grid via a converter of the UPS. This mode may be referred to as the default mode. In the second mode, power is supplied from the catcher system via the UPS. This mode may be referred to as catcher mode. In the third mode, power is supplied from the grid via the UPS bypassing the converter of the UPS. This mode may be referred to as bypass mode.

An advantage of such a power supply system is that an easy and efficient communication of the system element, i.e., the UPSs and the catcher system is possible via the one or more communication channels, as there is no need for each of the UPSs to also communicate with a respective (external) transfer switch. Moreover, use of a multiport transfer switch allows for cost reduction, as costs for a multiport transfer switch is less expensive than use of an external switch and an internal bypass switch for each of the UPSs. In addition, cost and space are saved by omitting the external switch and communication channel between UPS and external switch.

In terms of pricing, as an example, depending on the system configuration, the UPS of the present disclosure, compared to that of the prior art, may have one or more additional switches as part of the multiport transfer switch. For example, for a single corded load, there may be one additional switch at full power. For a dual corded load, for example, there may be two additional switches at full power of four additional switches at 50 % power. Modifying the UPSs as proposed by the invention, i.e., by introducing a multiport switch, is significantly less expensive than the external STS that may then be omitted. Considering typical pricing of external STSs, the proposed system may, for example, reduce the costs by approximately 90 % to 95 %.

Accordingly, the challenges described above in the context of the known systems are overcome.

As mentioned above, selectively switching between the modes may be done automatically. For example, the automatically selectively switching may be performed by one or more controllers, in particular, based on the information exchanged through the one or more communication channels and/or the status of the UPS, e.g., failed or non-failed. In particular, the selectively switching may be performed in such a manner as to maximize reliability of the power supply to every load of the power supply system. For example, if the converter of a UPS has failed the multiport transfer switch of the UPS may be switched to the second mode if the catcher has enough capability left to supply the associated load of the UPS, otherwise it may be switched to the third mode connecting the load to the grid bypassing the converter.

According to the present disclosure, the power supply system, in particular each of the UPSs, may be configured such that power from the catcher system is exclusively supplied to the one or more loads via one or more of the UPSs.

In other words, power from the power supply system may not be supplied to the one or more loads bypassing the one or more UPSs, i.e., it may not be supplied directly or only via elements, e.g., switches, external to the UPSs. The advantage of this is that the control of switching between the modes is entirely with the UPSs and no additional communication channels are required and coordination of power supply among the UPSs and the catcher system is more efficient. Moreover, system costs are reduced.

As an example, according to the present disclosure, the power supply system, particularly each of the UPSs, may be configured such that no static transfer switch, STS, for switching between the first mode and the second mode or between the third mode and the second mode is provided between the UPS and the load or loads associated with the UPS. Even more particularly, no STS, particularly no switch at all, may be provided between the UPS and the associated load or loads. Even more particularly, the UPS may be directly connected to the associated load or loads.

This does not preclude switches that are internal to the UPS, e.g. the multiport switch. Between the UPS and the load there may, however, as mentioned above, optionally be no switches.

It is noted that optionally a power distribution unit may be provided between the UPS and the associated load or loads.

According to the present disclosure the UPS, particularly the multiport transfer switch, may comprise one or more switches, particularly one or more transistors, e.g., insulated-gate bipolar transistor, IGBT, and/or one or more thyristors. In case of a plurality of switches, the switches may be connected with each other so as to implement the multiport functionality of the multiport switch, e.g., have some of their inputs and outputs connected with each other, and others of their inputs and outputs may be exposed as terminals of the multiport switch. While thyristors may be cost-efficient, IGBTs may have better performance.

According to the present disclosure, the multiport transfer switch of each UPS, in particular the entire UPS, may be controlled by a single controller or by multiple independent controllers, particularly redundantly.

Control by a single controller allows for particularly efficient communication at low cost. Control by multiple controllers may entail that in regular operation a single one of the controllers controls the multiport transfer switch, particularly the entire UPS, and the one or more other controllers only serve as backup to provide redundancy. This also allows for efficient communication and increased reliability. Alternatively or in addition, different controllers may be configured to control different parts of the UPS, in particular, different part of the multiport transfer switch. This allows for more specialized controller functionality, which may improve efficiency and/or reliability.

According to the present disclosure, the multiport transfer switch may comprise a plurality of switches. Optionally, in this case, the plurality of switches may be controlled by multiple independent controllers, in particular, one independent controller per switch.

According to the present disclosure, the one or more loads may comprise a single corded load having exactly one power supply terminal that is connected to one or more of the UPSs, particularly directly or only via a power distribution unit, PDU.

Alternatively or in addition, the one or more loads may comprise a dual corded load having exactly two power supply terminals, each connected to at least one of the UPSs, particularly directly or only via a power distribution unit, PDU. For a dual corded load, the load may be fed by two connections, e.g., via two input terminals. However, dual corded loads are configured such that the load can be operated by supplying power over only one of the input terminals.

The two terminals may be connected to the same UPS or to different UPSs. The former allows for easier coordination between the UPSs, the latter adds an inherent redundancy to the system.

According to the present disclosure, each power supply terminal of the load is connected, particularly directly or only via a power distribution unit, PDU, to an output of the multiport transfer switch of each UPS to which the power supply terminal is connected.

According to the present disclosure, the one or more loads may comprise at least a first load and a second load, wherein the first load and the second load are dual corded loads. In particular, both power supply terminals of the first load may be connected with a first one of the UPSs and/or both power supply terminals of the second load may be connected with a second one of the UPSs. Alternatively or in addition a first power supply terminal of the first load may be connect with one of the UPSs and a second power supply terminal of the first load may be connected with another one of the UPSs and/or a first power supply terminal of the second load may be connect with one of the UPSs and a second power supply terminal of the first load may be connected with another one of one of the UPSs.

According to the present disclosure, the UPSs may be communicatively coupled to each other via a common communication channel. In particular, the communication channel may be such that each of the UPSs is enabled to transmit data to and receive data from each of the other UPSs. This allows for efficient communication between the UPSs and coordination of their operation. For example, each UPS may have a communication interface, e.g., COM port, for exchanging, i.e., receiving and transmitting, data via the common communication channel based on a common communication protocol. The common communication channel allows for efficient, flexible, and low-complexity communication compared to multiple point-to-point communications. Accordingly, it enables coordination between the UPSs, which may, for example, communicate their state, e.g., failed or non-failed, and/or current and/or projected operation mode. Similarly, the catcher system may have a communication interface, e.g., a COM port for exchanging, i.e., receiving and transmitting, data via the common communication channel based on the common communication protocol.

Alternatively or in addition, each of the UPSs may be communicatively coupled to the catcher system via a/the common communication channel, particularly coupled so as to provide a redundant communication between the UPS and the catcher system. Connecting the catcher system to the UPSs, particularly via the communication channel connecting the UPSs with each other, allows for improved system operation and, particularly, coordination, for example by taking a state of the catcher system into consideration.

According to the present disclosure, each of the communication channels, in particular the common communication channel, may be configured for exchanging information comprising at least one of loading of each of the UPSs, status, and synchronization phase angle.

The power supply system, particularly the UPSs, may be configured to coordinate operation based on the exchanged information, particularly, to automatically switch between the first, second, and third mode based on the exchanged information. Loading may be data indicative of how much the UPS is currently loaded, e.g. 50% or 75%. Communicating the loading allows for improved coordination, as, in case of a converter failure in the UPS, for example, it can be determined whether the catcher system has the capability to pick up the load of the failed UPS. If this is not the case, the load may, for example, be switched to bypass. Status may be data indicative of a current mode of a UPS and/or the catcher system and/or a failure-indicator of a UPS or the catcher system.

The one or more UPSs, according to the present disclosure, may comprise a plurality of UPSs and the power supply system may be configured to communicatively couple, particularly via the one or more communication channels, the plurality of UPSs among each other and with the catcher system, e.g., so as to allow for coordination between the UPSs and optionally the catcher system. Particularly, the power supply system may be configured to communicatively couple, particularly via the one or more communication channels, the plurality of UPSs among each other and with the catcher system so as to allow for the plurality of UPSs to coordinate such that, in case multiple UPSs of the plurality of UPSs fail and the catcher system cannot compensate for all failed UPSs, one or more of the failed UPS are switched to the third mode. This allows for improved reliability and efficiency, as it can be avoided that the catcher system is overloaded or operated at an operating point where efficiency is decreased.

The power supply system according to the present disclosure may be configured to automatically switch between the first mode, the second mode, and the third mode so as to optimize overall system efficiency, particularly irrespectively of whether a UPS has failed. That is, for example, input data representative of operating points of individual UPSs or their converters and/or losses in the power supply system and/or operation characteristics of the catcher system may be used for determining, for each of the UPSs, an optimal operation mode among the first mode, second mode, and third mode, and the respective multiport switches of each of the UPSs may be automatically set so as to operate the UPS in the optimal operation mode. Thus, system efficiency may be improved in any easy manner.

The power supply system according to the present disclosure may be configured to supply power to equipment of a data center, in particular, wherein the loads are pieces of equipment of the data center. For example, the loads may comprise a computing device and/or a data storage device and/or a cooling device, and optionally a display device. For data centers, it is particularly important to ensure reliable power supply to the equipment, as otherwise loss of data may occur.

The present disclosure also provides a data center comprising the power supply system according to the present disclosure.

The invention also provides a method for operating a power supply system according to the present disclosure. The method comprises automatically detecting that at least one of the one or more UPSs has failed. This may be done in any manner known in the art. The method further comprises, in response to determining that at least one of the one or more UPSs has failed, the one or more UPSs and the catcher system communicating so as to determine, particularly coordinate, in which of the first, second, and third modes the one or more UPSs should operate. The method further comprises that each UPS controls, e.g. by means of a controller of the UPS, the multiport transfer switch of the UPS so as to switch to the determined mode unless the UPS is already operating in the determined mode. Thus, a coordinated operation of the components of the power supply system is possible.

In addition, the method for operating the power supply system may comprise automatically switch between the first mode, the second mode, and the third mode so as to optimize overall system efficiency, particularly irrespectively of whether a UPS has failed. Reference is made to the features described above in this regard in the context of the system features.

The invention also provides a computer program or a computer-readable medium comprising instructions which, when executed by a computer, cause the computer to carry out the steps of any of the methods of the present disclosure.

The features and advantages outlined above in the context of the power supply system similarly apply to the data center and the methods for operating the power supply system described herein.

Further features, examples, and advantages will become apparent from the detailed description making reference to the accompanying drawings.

### BRIEF DESCRIPTION OF THE DRAWINGS

In the accompanying drawings,
- Fig. 1: illustrates schematically a power supply system according to the present disclosure;
- Figs. 2a to 2c: illustrate schematically configurations of UPSs according to the present disclosure; and
- Fig. 3: illustrates schematically a prior art power supply system.

### DETAILED DESCRIPTION

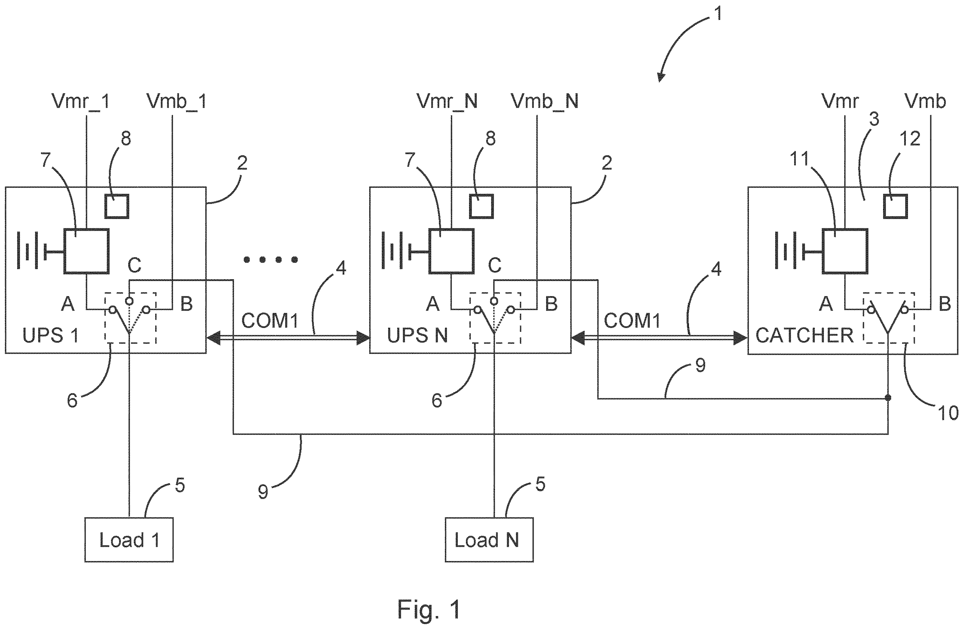

Fig. 1 illustrates schematically and not to scale, a power supply system according to the present disclosure.

The power supply system 1 shown in Fig. 1 comprises N uninterruptible power supplies, UPSs, 2. In Fig. 1, two UPSs are shown by way of example, but there may be any number of UPSs.

Moreover, the power supply system comprises a catcher system 3, which may, for example, be connected to the grid and/or a power source like a generator, and provides power to one or more of the UPSs in case the UPS is operated in a respective mode. This may be the case when the UPS, more specifically its converter, failed or for other reasons, e.g., to improve overall system performance.

As shown in Fig. 1, the power supply system also comprises a communication channel 4, labelled COM1. In this case, there is exactly one common communication channel. However, alternatively, there may be more than one communication channel. The communication channel communicatively couples the UPSs 2 with each other and with the catcher system 3. For example, each of the UPSs and the catcher system may have communication interfaces allowing for the UPSs and catcher system to receive and transmit data via the communication channel, e.g., on the basis of a common communication protocol.

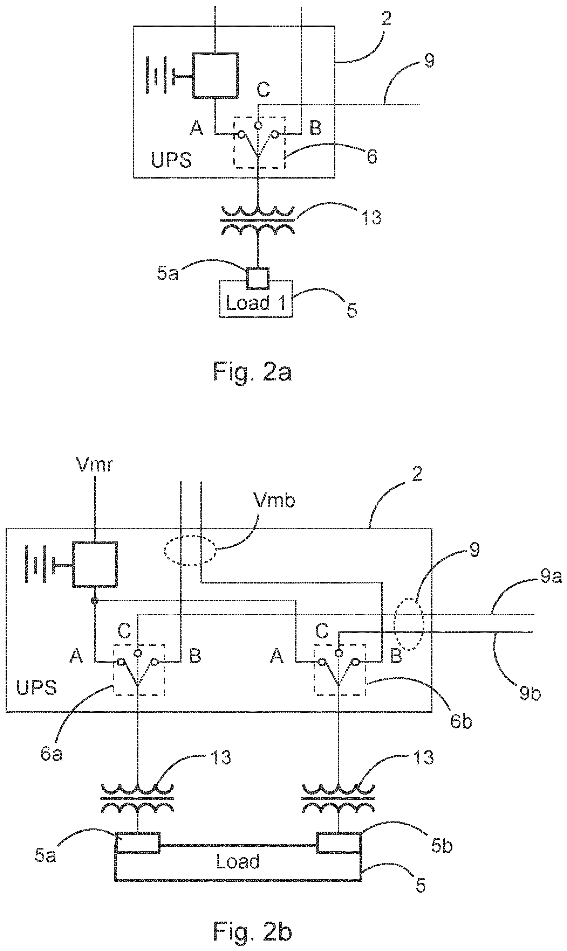

The power supply system also comprises loads 5, each load associated with at least one of the UPSs or, in other words, is supplied with power by at least one of the UPSs. That is, each UPS is connected, e.g., via power lines, directly as shown in Fig. 1 or via a power distribution unit as shown in Figs. 2a to 2c, to its associated load and, in operation, supplies power to the load. It is noted that for increased redundance, a load may also be associated with more than one UPS. However, the load is only supplied with power via a UPS, particularly, no power is supplied from the catcher system to the load bypassing the UPSs. In accordance with this, there is no external transfer switch, e.g. arranged between a load and a UPS, to switch between supply from a UPS and supply from the catcher system.

Each of the one or more UPSs is a multiport uninterruptible power supply, UPS, comprising a multiport transfer switch 6 operable to selectively switch between at least a first mode, a second mode, and a third mode of the UPS supplying power to the load or loads associated with the UPS.

In the first mode, the switching being in state A, power is supplied from the grid via a converter 7 of the UPS. In the second mode, the switch being in state C, power is supplied to the load from the catcher system via the UPS. In the third mode, the switch being in state B, power is supplied from the grid via the UPS bypassing the converter of the UPS.

According to the present disclosure, each UPS may comprise a controller 8 that controls the multiport transfer switch of the UPS, in particular the entire UPS.

In the figures, the input of grid power supplied via the transformer, also referred to as rectifier grid, is designated Vmr, Vmr-1, or Vmr_N. The input of bypass grid power is designated Vmb, Vmb_1, or Vmb_N.

In Fig. 1, each UPS is connected to the catcher system by a respective power line 9, such that the catcher system may provide power to a load via the power line 9 and UPS.

In the present example, the catcher system 3 may comprise a switch 10 for switching between supplying power via a converter 11 of catcher system 3 or bypassing the converter of the catcher system.

Controller 12 of catcher system 3 may be configured to control the switch 10 of the catcher system and optionally other functions of the catcher system, particularly, communication with the UPSs.

Fig. 2a shows an example of a UPS 2 according to the present disclosure connected to a single corded load 5. The system according to the present disclosure may comprise, in addition to a catcher system, one or more pairs of UPS and single corded load as shown in Fig. 2a, for example connected as shown in Fig. 1. In this example, a UPS is connected to the output terminal 5a of an associated single corded load via an optional power distribution unit, PDU, 13, which may be omitted, e.g., depending on the load. The multiport UPS may include an additional static switch (as compared to the prior art UPS), e.g. at full power, to create the multiport switch (MS). The multiport switch can be single phase or 3 phase.

Fig. 2b shows an example of a UPS according to the present disclosure connected to a dual corded load. The system according to the present disclosure may comprise, in addition to a catcher system, one or more pairs of UPS and dual corded load as shown in Fig. 2b, for example connected as shown in Fig.1.

In Fig. 2b, for each power supply terminal 5a, 5b, a PDU 13 is provided between the load and the UPS. Moreover, the UPS comprises a multiport switch 6a, 6b, each connected to only one of the power supply terminals 5a, 5b via the respective PDU. The PDUs are optional and may be omitted, particularly such that the UPS is directly connected to the power supply terminals of the load. Each multiport switch 6a, 6b is connected to the catcher system via a power line 9a, 9b. The power lines may each be connected to a separate output terminal of the catcher system, or they may be grouped so as to be connected to the same output terminal of the catcher system.

Moreover, in Fig. 2b, each of the multiport switches, via terminal B in this example, is connected to Vmb via a separate line. However, these lines may also be grouped, similarly to the power lines 9 connecting the UPS to the catcher system. In this example, the multiport UPS may include two additional static switches (compared to a prior art UPS) to create two multiport switches. Note that the multiport switches can be single phase or 3 phase.

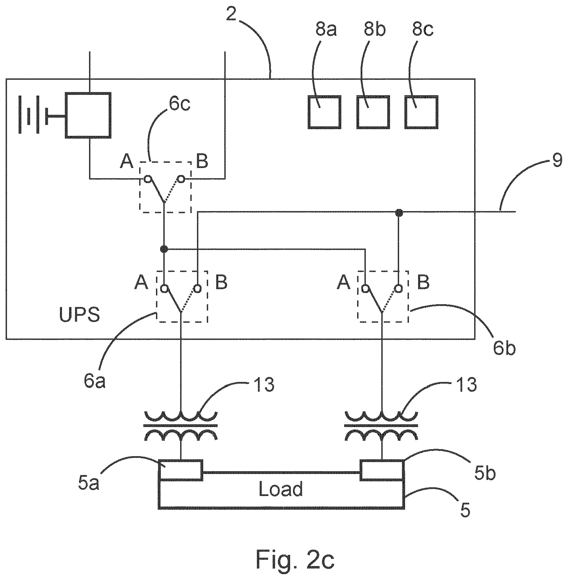

In Fig. 2c, an alternative configuration for a UPS and its associated load, which is a dual corded load in this example, is shown. The multiport switch comprises a plurality of switches 6a, 6b, 6c, one switch 6c switching between bypassing and not bypassing the transformer, and, for each of the power supply terminals, a switch 6a, 6b selectively connecting the power supply terminal to the switch 6c or the power supply line 9. Accordingly, in this example, two-port switches may be used together so as to create a multiport switch. In this example, the plurality of switches are controlled by multiple independent controllers 8a, 8b, 8c, in particular, one independent controller per switch. Alternatively, they may be collectively controlled by the same controller.

While the figures illustrate configurations where a single load is associated with each UPS, it is also conceivable that a load is associated with multiple UPSs, for example to increase redundancy. For that purpose, switches may be connected between a UPS and a load, but power from the catcher system will nonetheless be routed via and switched by the UPS.

In an example not shown in the figures, for a dual corded load, the UPS may comprise (compared to prior art UPS) four additional switches at 50 % power to create four multiport switches.

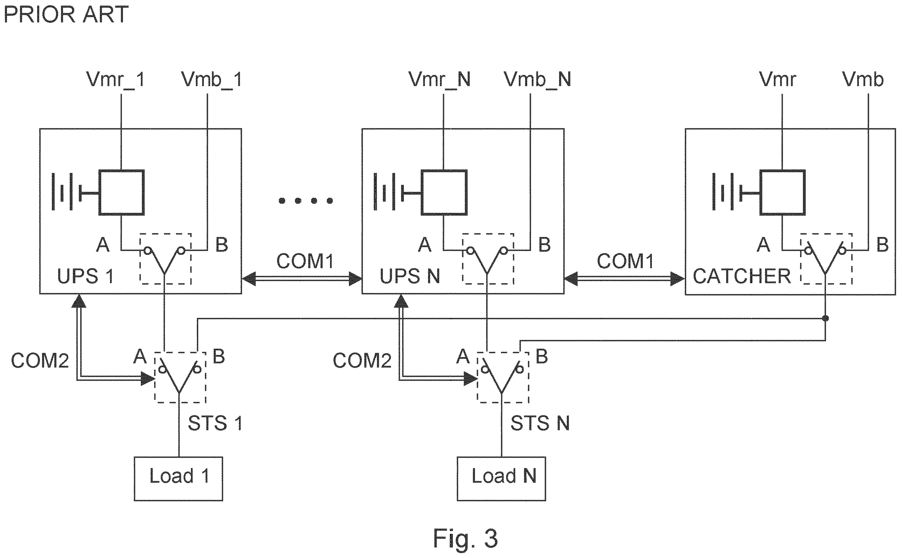

Fig. 3 illustrates schematically a power supply system according to the prior art. As can be seen from Fig. 4, an additional external static transfer switch STS (STS1 to STSN) is provided for each UPS between the UPS and an associated load.

As can be seen in Fig. 3, the power from the catcher system is not routed via the respective UPS but only passes through the external STS associated with the UPS. The external STS switches between power supply from the UPS and power supply from the catcher system. Accordingly, for each UPS, the switching state of a UPS-internal switch, which allows for bypassing the UPSs transformer, and the switching state of the external STS have to be coordinated to switch between the three modes described above. To that end, each of said STSs communicates over an individual communication channel COM2 with its associated UPS. Moreover, to allow for coordination, the UPSs communicate via COM1 among each other. Thus, coordinating power supply for the entire system is difficult, as this involves coordination via COM1 and at least N COM2 channels, where N is the number of UPSs.

The additional external switches and additional communication switches (compared to the system of the present disclosure) also increase material and maintenance costs and system size.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A power supply system (1) comprising:
one or more uninterruptible power supplies, UPSs (2);
a catcher system (3);
one or more communication channels (4), each communicatively coupling at least one, in particular all, of the UPSs (2) with another one of the UPSs (2) and/or with the catcher system (3); and
one or more loads (5), each associated with at least one of the UPSs (2),
wherein each of the one or more UPSs (2) is a multiport uninterruptible power supply, UPS, comprising a multiport transfer switch (6) operable to selectively switch between at least a first mode, a second mode, and a third mode of the UPS (2) supplying power to the load (5) or loads (5) associated with the UPS (2),
wherein, in the first mode, power is supplied from the grid via a converter (7) of the UPS (2), wherein, in the second mode, power is supplied from the catcher system (3) via the UPS (2), and
wherein, in the third mode, power is supplied from the grid via the UPS (2) bypassing the converter (7) of the UPS (2).

2. The power supply system of claim 1, wherein the power supply system, in particular each of the UPSs, is configured such that power from the catcher system (3) is exclusively supplied to the one or more loads (5) via one or more of the UPSs (2), and/or
wherein the power supply system, particularly each of the UPSs (2), is configured such that no static transfer switch, STS, for switching between the first mode and the second mode or between the third mode and the second mode is provided between the UPS (2) and the load (5) or loads (5) associated with the UPS (2).

3. The power supply system of any of the preceding claims, wherein the UPS (2), particularly the multiport transfer switch, comprises one or more switches, particularly one or more transistors, e.g., insulated-gate bipolar transistor, IGBT, and/or one or more thyristors.

4. The power supply system of any of the preceding claims, wherein the multiport transfer switch of each UPS (2), in particular the entire UPS (2), may be controlled by a single controller (8) or by multiple independent controllers, particularly redundantly.

5. The power supply system of any of the preceding claims, wherein the multiport transfer switch (6) comprises a plurality of switches (6a, 6b, 6c) and the plurality of switches are controlled by multiple independent controllers (8a, 8b, 8c), in particular, one independent controller per switch.

6. The power supply system of any of the preceding claims, wherein the one or more loads (5) comprise a single corded load having exactly one power supply terminal (5a) that is connected to one or more of the UPSs (2), particularly directly only via a power distribution unit, PDU, and/or

7. The power supply system of any of the preceding claims, wherein the one or more loads (5) comprise a dual corded load having exactly two power supply terminals (5a, 5b), each connected to at least one of the UPSs (2), particularly directly only via a power distribution unit, PDU.

8. The power supply system of claim 6 or 7, wherein each power supply terminal is connected to an output of the multiport transfer switch (6) of each UPS (2) to which the power supply terminal is connected.

9. The power supply system of any of the preceding claims, wherein the one or more loads (5) comprise at least a first load and a second load, wherein the first load and the second load are dual corded loads.

10. The power supply system of any of the preceding claims,
wherein the UPSs (2) are communicatively coupled to each other via a common communication channel (4), and/or
wherein each of the UPSs (2) is communicatively coupled to the catcher system (3) via a/the common communication channel (4), particularly coupled so as to provide a redundant communication between the UPS (2) and the catcher system (3), and/or
wherein each of the communication channels (4), in particular the common communication channel (4), is configured for exchanging information comprising at least one of loading of each of the UPSs (2), status, and synchronization phase angle.

11. The power supply system of any of the preceding claims,
wherein the one or more UPSs (2) comprise a plurality of UPSs (2) and the power supply system is configured to communicatively couple, particularly via the one or more communication channels (4), the plurality of UPSs (2) among each other and with the catcher system (3), particularly so as to allow for the plurality of UPSs (2) to coordinate such that, in case multiple UPSs (2)of the plurality of UPSs (2) fail and the catcher system (3) cannot compensate for all failed UPSs (2), one or more of the failed UPS (2) are switched to the third mode.

12. The power supply system of any of the preceding claims, wherein the power supply system is configured to automatically switch between the first mode, the second mode, and the third mode so as to optimize overall system efficiency, particularly irrespectively of whether a UPS (2) has failed.

13. The power supply system of any of the preceding claims, wherein the power supply system is configured to supply power to equipment of a data center, in particular, wherein the loads (5) are pieces of equipment of the data center.

14. A method for operating a power supply system according to claims 1 to 13, the method comprising
automatically detecting that at least one of the one or more UPSs (2) has failed;
in response thereto, the one or more UPSs (2) and the catcher system (3) communicating so as to determine, particularly coordinate, in which of the first, second, and third modes the one or more UPSs (2) should operate; and
each UPS (2) controlling, by means of a controller of the UPS (2), the multiport transfer switch (6) so as to switch to the determined mode unless the UPS (2) is already operating in the determined mode.

15. A computer program or computer-readable medium comprising instructions which, when executed by a computer, cause the computer to carry out the steps of claim 11.
